# EUROPEAN PATENT SPECIFICATION

(11) **EP 0 523 045 B1**
(45) Date of publication and mention of the grant of the patent: **29.11.1995**
(21) Application number: 90915895.8
(22) Date of filing: 27.09.1990
(51) Int. Cl.: B65G 27/18, A23L 3/18, A23L 3/005, A23L 3/01, A23B 9/08, A23B 9/04, A23L 3/54

(54) **vibratory bulk material processor**
Vibrationsvorrichtung zum Behandeln von Schüttgut
dispositif de traitement vibratoire de matières en vrac

(30) Priority: 05.01.1990 CA 2007229
(43) Date of publication of application: 20.01.1993
(73) Proprietor: Innovative Grain Technologies, Inc., Lincoln, NB 68528 (US)
(72) Inventor: BAILEY, Richard, G., Overland Park, KS 66214 (US); LEGGOTT, Merton, R., Lincoln, NB 68528 (US)
(74) Representative: Powell, Stephen David
(86) International application number: US9005526
(87) International publication number: WO9109532

(56) References cited:
- US-A- 3 063 848
- US-A- 3 343 961
- US-A- 3 701 670
- US-A- 4 399 350
- US-A- 4 555 409
- US-A- 4 776 267

## Description

### Background of the Invention

### 1. Field of the Invention.

The present invention relates generally to bulk material processing and in particular to radiation processing of food and feed materials.

### 2. Description of the Prior Art.

Various materials for human food and animal feed are processed in preparation for consumption. Such material processing can include cleaning, cooking, grinding, mixing, etc. For example, many materials such as grains, vegetable beans, seeds and nuts are cooked to improve their taste, texture, digestability and spoilage resistance. Materials can be steamed, boiled, popped, cracked, etc. in preparation for consumption. In addition to these cooking methods, infrared radiation has also been employed for cooking and for controlling molds, fungi, yeast, spores and bacteria to retard spoilage. The Pierce U. S. Patents No. 3,694,220; No. 3,701,670 and No. 4,153,733 disclose an infrared radiation cooking method, an infrared micronizing cooker and an infrared radiation cooked wafer respectively.

Both the aforementioned Pierce '220 and '670 patents disclose infrared cooking equipment with tilted plates connected to vibrators for advancing the material in a downhill direction beneath infrared radiators or heaters.

The Newton British Patent No. 1,379,116 discloses another type of infrared radiation cooking equipment wherein cereals and other seeds are conveyed beneath infrared heaters on an endless woven wire belt. The belt-type infrared radiation processor disclosed in the Newton '116 British patent can be utilized in a method for dehulling cacao beans disclosed in the Zuilichem et al. U. S. Patent No. 4,322,444.

Infrared radiation processing can benefit a number of food and feed materials. For example, the starches of cereal grains can be gelatinized thereby for improved digestability. Some grains and seeds can be swollen and fractured by infrared radiation for improved texture. Moreover, infrared cooking of some cereal grains and vegetable beans can enhance their flavors, appearances, digestability and nutritional values.

Infrared cooking can also be important for controlling spoilage in processed food and feed materials. For example, untreated oat groats include an enzyme which can cause rancidity or oxidization if not neutralized. Infrared cooking can neutralize these enzymes and thus extend the shelf life of infrared-cooked oat groats in sealed containers to several months. Similar results can be achieved by infrared radiating rice kernels, which are otherwise susceptible to rapid spoilage caused by lipase enzymes. Furthermore, various flours used to bake bread can be infrared cooked to control rope spores which can spoil the finished product.

Heretofore there has not been a bulk material processor with the advantages and features of the present invention.
US-A-3,701,670 mentioned above, discloses a radiation processor for granular material comprising a framework-assembly, means defining a material flow path and connected to a vibrator and to vibration dampening means, and an infrared heater mounted on said framework assembly over said material flow path. This disclosure corresponds generally to the preamble of claim 1. However, in US-A-3,701,670 the material flow path is defined by a tilted vibrating plate and the vibration dampening means are defined by leaf springs.

### Summary of the Invention

According to the present invention, there is provided a bulk material radiation processor comprising a framework assembly, means defining a material flow path, a vibrator operably connected to said path-defining means, vibration dampening means connected to said framework assembly and said path-defining means, and an infrared heater mounted on said framework assembly over said path-defining means, characterised in that said path-defining means comprises a tray assembly, which includes:
(1) a pair of transversely-spaced side walls;
(2) an upper plate extending transversely between said side walls and including a material-receiving upper surface and longitudinally-spaced upstream and downstream ends;
(3) a lower plate extending transversely between said side walls and including a material-receiving upper surface and longitudinally-spaced upstream and downstream ends;
(4) longitudinally-spaced upstream and downstream tray assembly ends; and
(5) mounting means for mounting said tray assembly on said framework assembly;
said material flow path extending from said tray assembly upstream end to said tray assembly downstream end over said plate material-receiving upper surfaces and between said tray assembly side walls; and in that said vibration dampening means comprise a pneumatic shock absorber.

In preferred embodiments of the present invention, a bulk material processor is provided which includes a framework assembly mounting a vibratory feeder assembly at an upstream end of the processor and a plurality of tray assemblies in a longitudinally-aligned series extending from the upstream end to a processor downstream end. Each tray assembly includes a panel subassembly comprising a plurality of individual panel sections in a stairstep configuration. The tray assemblies are mounted on the framework assembly in a descending line whereby each tray assembly is positioned slightly higher than the next tray assembly downstream.

A vibration system is provided and includes a vibrator assembly for the feeder assembly and a vibrator assembly for each tray assembly. The bulk material is advanced along the panel subassemblies by vibration. A heating system includes a plurality of heater panels positioned over the tray assemblies for heating the bulk material flowing thereunder, primarily by radiation. The heater assemblies can comprise, for example, electrically powered or fossil-fuel powered infrared heaters.

### Objects and Advantages of the Present Invention

The principle objects and advantages of the present invention include: providing a bulk material processor; providing such a processor which is particularly adapted for processing food and feed materials for human and animal consumption; providing such a processor which is particularly adapted for processing cereal grains, vegetable beans, seeds and nuts; providing such a processor which utilizes infrared radiation; providing such a processor which turns, rotates and tumbles the material; providing such a processor which provides relatively uniform processing; providing such a processor which can utilize various energy sources; facilitating a method for processing bulk material; facilitating such a method which is relatively efficient; facilitating such a method which can be utilized on a variety of human food and animal feed materials; facilitating such a method which is relatively variable and adaptable; and facilitating such a method which is particularly adapted for its proposed usage.

Other objects and advantages of this invention will become apparent from the following description taken in conjunction with the accompanying drawings wherein are set forth, by way of illustration and example, certain embodiments of this invention.

The drawings constitute a part of this specification and include exemplary embodiments of the present invention and illustrate various objects and features thereof.

### Brief Description of the Drawings

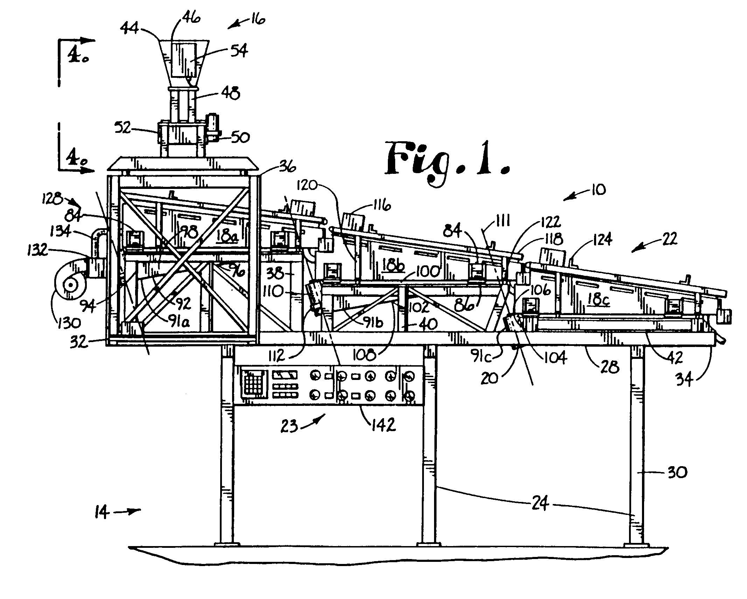

Fig.1 is a side elevational view of a bulk material processor embodying the present invention.

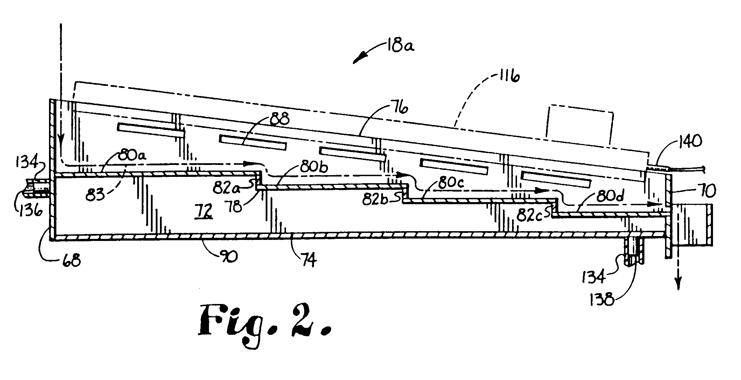

Fig.2 is an enlarged, fragmentary, cross-sectional view of the processor, particularly showing a tray assembly thereof.

Fig.3 is a schematic view showing the steps of a method of processing bulk material according to the present invention.

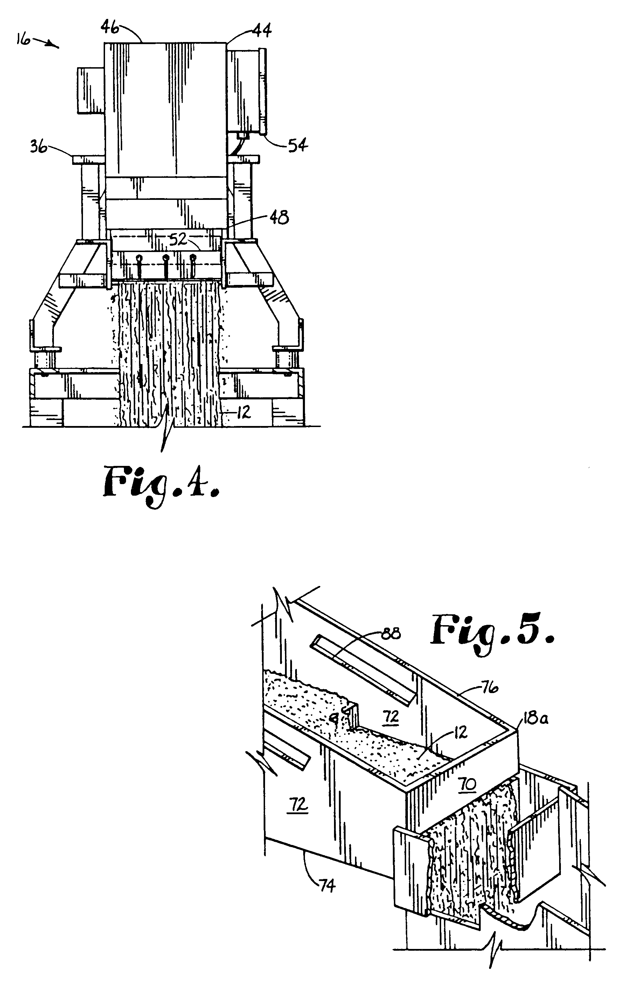

Fig.4 is a fragmentary, enlarged, downstream elevational view of a feeder assembly of the processor.

Fig.5 is a fragmentary, enlarged, perspective view of the processor, particularly showing a tray assembly.

### Detailed Description of the Preferred Embodiments

### I. Introduction and Environment

Certain terminology will be used in the following description for convenience and reference only and will not be limiting. For example, the words "upwardly", "downwardly", "rightwardly" and "leftwardly" will refer to directions in the drawings to which reference is made. The words "inwardly" and "outwardly" will refer to directions toward and away from, respectively, the geometric center of the structure being referred to. "Upstream" and "downstream" relate to the product flow path. Said terminology will include the words specifically mentioned, derivatives thereof and words of similar import.

Referring to the drawings in more detail, the reference numeral 10 generally designates a bulk material processor according to the present invention. The processor 10 is adapted for processing bulk material 12 which may comprise, for example, various food materials for human consumption and feed materials for animal consumption. Without limitation on the generality of useful applications of the processor 10 and the processing method, particularly suitable materials for processing including cereal grains, vegetable beans, seeds and nuts.

The processor 10 generally comprises a structural framework assembly 14, a feeder assembly 16, a plurality (e.g. three are shown) of tray assemblies 18a-18c, a vibration system 20, a heating system 22, and a control system 23.

### II. Framework Assembly 14.

The framework assembly 14 includes six upright columns 24, three on each side of the processor 10, innerconnected by transverse crossbeams 26 and by a pair of longitudinally-extending longitudinal members 28 each extending along a respective side of the processor 10. The columns 24, crossbeams 26 and longitudinal members 28 form a base subframe 30 with upstream and downstream ends 32, 34.

A feeder assembly subframe 36 is mounted on top of the base subframe 30 in proximity to its upstream end 32. An upstream tray assembly subframe 34 is mounted on top of the base subframe 30 and can be positioned somewhat within the feeder assembly subframe 36. An intermediate tray assembly subframe 40 is mounted on top of the base subframe 30 approximately midway therealong and a downstream tray assembly subframe 42 is mounted on the base subframe 30 in proximity to its downstream end 34.

The framework assembly 14 may comprise suitable structural steel members -- e.g. steel tubes, angle sections, channels, gussets, etc. -- innerconnected by suitable mechanical fastening means, such as weldments, bolts, rivets, clamps, etc.

### III. Feeder Assembly 16.

The feeder assembly 16 is mounted on the feeder assembly subframe 36 and includes a hopper 44 with an upwardly-open mouth 46. A throat 47 is provided at a lower end of the feeder assembly 16 for discharging bulk material. A vibrator 50 is mounted on a downstream side of the feeder assembly 16 and facilitates the flow of bulk material 12 from the feeder assembly 16. The vibrator 50 can comprise a Model SCR-200 eccentric or off-center weighted rotary vibrator, which is available from Vibco, Inc. of Wyoming, Rhode Island. The vibrator 50 can be variable speed and variable force.

A feeder assembly discharge gate 52 is provided on the feeder assembly upstream end and is vertically adjustable for adjusting the flow from the feeder assembly 16. A product level switch 54 can be mounted on a side of the feeder assembly 16 and can be set to close when the material level in the hopper 44 falls below a certain, predetermined low level whereby a supply mechanism (not shown, but possibly comprising a grain drill or the like) can be activated to refill the hopper 44.

### IV. Tray Assemblies 18a-18c.

The upstream, intermediate and downstream tray assemblies 18a, 18b and 18c are respectively mounted on the upstream, intermediate and downstream tray assembly subframes 38, 40 and 42. Each tray assembly 18a-18c includes upstream and downstream ends 68, 70 and a pair of transversely-spaced, generally vertical side walls 72 with lower, generally horizontal edges 74 and upper edges 76.

Each tray assembly 18a-18c includes a panel subassembly 78 comprising a plurality (e.g. four) of substantially horizontal, generally planar panel sections 80a-80d aligned longitudinally with respect to each other from the tray assembly upstream end 68 to its downstream end 70. The panel sections 80a-80d include respective upper surfaces. Generally vertical transition walls 82a-82c interconnect respective adjacent pairs of panel sections 80a-80d. Specifically, transition wall 82a interconnects panel sections 80a and 80b, transition wall 82b interconnects panel sections 80b and 80c, and transition wall 82c interconnects panel sections 80c and 80d. The panel subassembly 78 has a generally stair-step configuration with each panel section 80b-80d being slightly lower than the next panel section upstream. The panel subassembly 78 forms a cascading flow path 83 for the bulk material 12 which extends longitudinally in successively lower steps from the tray assembly upstream end 68 to its downstream end 70.

Each tray assembly 18a-18c includes four feet 84 projecting transversely outwardly from the side wall 72 in proximity to the tray assembly ends 68, 70. Height-adjustable, pneumatic support dampeners 86 interconnect the feet 84 and the tray assembly subframes 38, 40 and 42. The dampeners 86 may comprise air mount Model No. 16 units available from the Firestone Tire and Rubber Company.

Each side wall 72 includes a plurality of longitudinally-spaced vent slots 88 which extend in generally parallel relation spaced below the respective side wall upper edges 76. By way of example only, five vent slots 88 are shown in each side wall 72. A bottom panel 90 extends between the side wall lower edges 74 in a generally horizontal plane.

### V. Vibration System.

The vibration system 20 includes a plurality (e.g. three) of vibrator assemblies 91a-91c each including a respective vibration coupling subassembly 92 mounted on a respective tray assembly bottom panel 90 and including upstream and downstream ends 94, 96.

Each vibration coupling subassembly 92 includes a pair of generally vertical, transversely-spaced, triangularly-shaped side walls 98 with upper and lower margins 100, 102 converging at the subassembly downstream end 96 and an upstream margin 104 which intersects the upper margin 98 at an angle of approximately seventy-two degrees. Each vibration coupling subassembly 92 includes an upstream end panel 106 extending transversely between the upstream sides 104 and a lower panel 108 extending transversely between the side wall lower sides 102. The aforementioned angle of approximately seventy-two degrees formed by the side wall upper and upstream margins 98 and 104 determine the slope in a downstream direction from top-to-bottom of the upstream end panel 106, which slopes approximately eighteen degrees from the vertical.

Each vibrator assembly 91a-91c includes a pair of vibrator units 110 mounted in transversely juxtaposed relation on the coupling subassembly end panel 106. The vibrator units 110 can comprise, for example, heavy-duty electric vibrators such as those available from Vibco, Inc. of Wyoming, Rhode Island, e.g. Model No. 4T1000. Suitable vibrator units could employ either eccentric rotary or reciprocating principles of operation. The aforementioned Vibco vibrator units 110 employ an eccentric or off-center imbalanced rotary principle of operation, and can be adjusted with respect to speed and vibratory force amplitude. The vibratory units 110 are attached to the end panels 106 in vibration-coupling relationships with the vibration coupling subassemblies 92 by mounting bolts 112. The vibrator units 110 have rotational axes 111 which extend generally parallel to the end panels 106 on which the vibrator units 110 are mounted. Thus, the rotational axes 111 are tilted at angles of approximately eighteen degrees from the vertical. The vibratory force waves emitting from the vibrator units 110 eminate radially outwardly from the rotational axes 111, and are thus transmitted through the vibration coupling subassemblies 92 in an upward and downstream direction to the tray assemblies 18a-18c. Such vibratory forces thus tend to cause the bulk material 12 on the panel subassemblies 78 to flow in a downstream direction. The vibratory force waves also tend to lift the bulk material 12 from the upper surfaces of the panel section 80a-80d because of the upward component of the vibratory force vectors. Downstream motion is achieved by the downstream component of the vibratory force vectors. The vibrator units 110 can operate on alternating current electrical power with a nominal voltage of approximately two hundred and thirty volts.

### VI. Heating System 22.

The heating system 22 includes a plurality of infrared heater panels 116 each mounted on a respective heater panel subframe 118 with legs 120 resting on vibration-dampening feet 122 which engage the tray assembly subframes 38, 40 and 42 respectively. Transverse, angle section crossbars 124 extend in longitudinally-spaced pairs across the heater panel subframes 118, each pair suspending a respective heater panel 116 over a respective tray assembly 18a-18c.

The heater panels can be electrically powered or can be powered by a fossil fuel, such as natural gas. Although radiation in the infrared range is suitable for accomplishing the objects of the present invention, radiation in other ranges (e.g. microwave, ultraviolet, etc.) could also be employed. Electrically powered heater panels can be connected to a suitable source of electrical power and fossil-fuel powered heater panels can be connected to a suitable source of fossil fuel.

### VII. Control System 23.

The control system 23 includes a forced-air cooling system 128 including a pair of fans or blowers 130 connected to a manifold 132 which in turn is connected to an air duct 134. The air duct 134 is pneumatically coupled to an inlet coupling on the upstream end 68 of the upstream tray assembly 18a. Air flows from the fans 130, through the manifold 132, through the air duct 134, and into the tray assembly 18a interior at the inlet coupling 136. An outlet coupling 138 is located in proximity to the tray assembly downstream end 70 in the bottom panel 90. Each tray assembly 18a-18c includes inlet and outlet couplings 136, 138 which are serially connected between the tray assemblies 18a-18c whereby airflow enters the upstream tray assembly 18a, flows through the intermediate tray assembly 18b and exits the downstream tray assembly 18c, thereby removing excess heat from each.

A sensor 140 is placed over the product flow path to provide a signal corresponding to the product heat, which signal can be monitored by the control system 23 or by an operator. Interactive temperature control systems are available for adjusting the power input to the heater panels 116 in response to signals from the sensor 140.

An electrical control panel 142 can be mounted on the framework assembly 14 for controlling the operation of the processor 10. The control panel 142 can include controls for individually and/or collectively controlling the power input (and hence the heat output and radiation wave range) of the heater panels 116. The frequency and amplitude of the vibrations emitted by the vibrators 50, 110 can also be controlled at the control panel 142. The paired, juxtaposed vibrator units 110 can be independently controlled with respect to their adjustable vibratory frequencies and amplitudes. The flow characteristics of the bulk material 12 can thus be varied. For example, the flow speed can be adjusted by adjusting the vibratory frequencies and amplitudes of the vibrators 110. Suitable temperature gauges, amp meters, safety and startup switchgear and the like can be provided on the control panel 142.

### VIII. Operation.

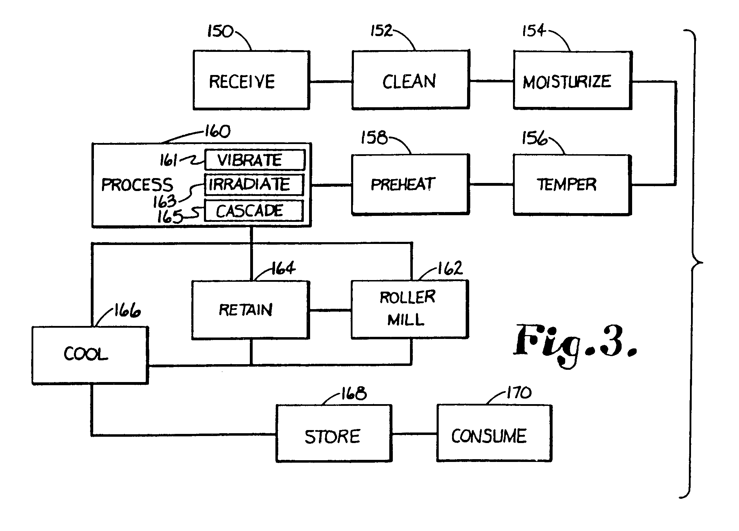

The bulk material processing method of the present invention is schematically illustrated in Fig. 3 as the method might be utilized for processing a food or feed product from a bulk material. Without limitation on the generality of useful bulk materials which can be processed with or according to the present invention, certain cereal grains, vegetable beans, seeds and nuts are suitable for processing.

The bulk material is received 150, subjected to a cleaning step 152 (e.g. air cleaning, sifting, etc.), moisturized (e.g. with a moisturizing blower or by steam injection) 154, tempered whereby the moisture is absorbed at 156, preheated by any of various available preheating means 158, and processed 160 with the processor 10.

After processing 160, the bulk material 12 will have received heat in the form of radiant energy and have an elevated temperature. The heated bulk material 12 can then be passed to a roller mill for rolling and/or crushing it 162 to flakes or the like. Another optional step comprises retention 164 of the material 12, e.g. in an insulated retention vessel, whereby the beneficial effects of the applied heat can be enhanced. A cooling stage 166 may also be provided, whereafter the material can be stored 168 and consumed 170.

It will be appreciated that many of the aforementioned steps are optional, and the appropriate steps and their sequence of operation can be chosen pursuant to the requirements of particular bulk materials being processed and the desired characteristics of the finished products. For example, as indicated in Fig. 3, the roller mill step 162 and the retention step 164 can be bypassed altogether, or used independently or together.

Within the process step 160, the bulk material 12 is vibrated 161, irradiated 163 and cascaded 165 whereby the bulk material 12 tends to cascade through the tray assemblies 18a-18c with drops between respective tray panel sections 80a-80b at the panel transition walls 82a-82c. The panel subassemblies 78 can be designed with the drops and the corresponding transition wall 82a-82c heights equal to, for example, approximately 25,4 and 38.1 mm (one and one-half inches). Uniform irradiation of the bulk material 12 is thus promoted since each seed, kernel, grain, etc. would normally turn several times as it flows through the processor 10. Scorching, burning and accidental fires can thus be minimized. The vent slots 88 permit steam to escape from the bulk material 12 as it is driven out by the radiation.

## Claims

1. A bulk material radiation processor (10) comprising a framework assembly (14), means defining a material flow path, a vibrator (20) operably connected to said path-defining means, vibration dampening means (86) connected to said framework assembly and said path-defining means, and an infrared heater (22) mounted on said framework assembly over said path-defining means, characterised in that said path-defining means comprises a tray assembly (18), which includes:
(1) a pair of transversely-spaced side walls (72);
(2) an upper plate (80a) extending transversely between said side walls and including a material-receiving upper surface and longitudinally-spaced upstream and downstream ends;
(3) a lower plate (80b) extending transversely between said side walls and including a material-receiving upper surface and longitudinally-spaced upstream and downstream ends;
(4) longitudinally-spaced upstream (68) and downstream (70) tray assembly ends; and
(5) mounting means (38,40,42) for mounting said tray assembly on said framework assembly;
said material flow path extends from said tray assembly upstream end (68) to said tray assembly downstream end (70) over said plate material-receiving upper surfaces and between said tray assembly side walls;
and in that said vibration dampening means comprise a pneumatic shock absorber (86).

2. A processor according to claim 1, comprising a feeder assembly (16) mounted over said tray assembly upper plate and including a hopper (44) adapted to receive material and a discharge gate (52) adapted to discharge material from said hopper onto said tray assembly upper plate.

3. A processor according to claim 2, wherein said discharge gate (52) is adjustable whereby the discharge rate of material from said hopper (44) is variable.

4. A processor according to any preceding claim, wherein said feeder assembly (16) includes a second vibrator (50) mounted on said hopper.

5. A processor according to any preceding claim, wherein said first vibrator (20) comprises a rotary, eccentrically-weighted, electrically powered vibrator unit.

6. A processor according to claim 5, wherein said vibrator unit includes a rotational axis tilted in an upstream direction from bottom-to-top from vertical.

7. A processor according to claim 6, wherein the vibrator rotational axis tilt angle is approximately eighteen degrees.

8. A processor according to any preceding claim, wherein said tray assembly (18) includes a vibration coupling subassembly (92) mounting said vibrator (20).

9. A processor according to claim 8, wherein said tray assembly includes a bottom panel (90) mounting said vibration coupling subassembly, and said vibration coupling subassembly includes an upstream end panel (106) mounting said vibrator.

10. A processor according to any preceding claim, wherein said infrared heater (22) is electrically-powered.

11. A processor according to any of claims 1 to 9, wherein said infrared heater (22) is gas-fired.

12. A processor according to any preceding claim, wherein said vibrator (20) comprises a plurality of vibrator assemblies (91a-91c).

13. A processor according to any preceding claim, wherein said vibration dampening means (86) comprises a plurality of shock absorbers.

14. A processor according to any preceding claim which includes a first and second tray assemblies (18a,18b), the mounting means (38,40) serially mounting said first and second tray assemblies on said framework assembly (14) with said first tray assembly downstream end over said second tray assembly upstream end; a material flow path from said first tray assembly upstream end, over said first tray assembly plate material-receiving upper surfaces to said first tray assembly downstream end, over said first tray assembly downstream end to said second tray assembly upstream end, over said second tray assembly plate material-receiving upper surfaces to said second tray assembly downstream end, and over said second tray assembly downstream end; and first and second vibrators (91a, 91b) operably connected to said first and second tray assemblies respectively.

15. A processor according to claim 14, wherein said first and second vibrators (91a, 91b) are mounted on a coupling subassembly in transversely juxtaposed relationship.

16. A processor according to claim 14 or 15, wherein said first and second vibrator units (91a, 91b) are independently adjustable with respect to vibration frequency and amplitude.

## Patentansprüche

1. Ein Bestrahlungsprozessor (10) für Schüttgut, der eine Rahmentragewerkanordnung (14), eine Einrichtung zum Festlegen eines Materialflußwegs, einen Vibrator (20), der wirksam mit der Weg-Festlegungseinrichtung verbunden ist, eine Vibrationsdämpfungseinrichtung (86), die mit der Rahmentragewerkanordnung und der Weg-Festlegungseinrichtung verbunden ist, und einen Infrarotheizer (22), der auf der Rahmentragewerkanordnung oberhalb der Weg-Festlegungseinrichtung befestigt ist, umfaßt,
dadurch gekennzeichnet,
daß die Weg-Festlegungseinrichtung eine Korbanordnung (18) umfaßt, die folgende Merkmale einschließt:
(1) ein Paar von quer beabstandeten Seitenwänden (72);
(2) eine obere Platte (80a), die sich quer zwischen den Seitenwänden erstreckt und eine materialaufnehmende obere Oberfläche (81) und longitudinal beabstandete Enden flußaufwärts und flußabwärts einschließt;
(3) eine untere Platte (80b), die sich quer zwischen den Seitenwänden erstreckt und eine materialaufnehmende obere Oberfläche (81) und longitudinal beabstandete Enden flußaufwärts und flußabwärts einschließt;
(4) longitudinal beabstandete flußaufwärtige (68) und flußabwärtige (70) Korbanordnungsenden; und
(5) eine Befestigungseinrichtung (38,40,42) zum Befestigen der Korbanordnung auf der Rahmentragewerkanordnung;
wobei sich der Materialflußweg von dem flußaufwärtigen Ende (68) der Korbanordnung zu dem flußabwärtigen Ende (70) der Korbanordnung über die materialaufnehmenden oberen Oberflächen der Platte und zwischen den Seitenwänden der Korbanordnung erstreckt; und
daß die Vibrationsdämpfungseinrichtung einen pneumatischen Stoß-Absorbierer (86) umfaßt.

2. Ein Prozessor nach Anspruch 1, der eine Zuführungsanordnung (16) umfaßt, die oberhalb der oberen Platte der Korbanordnung befestigt ist und einen Trichter (44), der angepaßt ist, um Material aufzunehmen, und ein Entladungstor (52) einschließt, das angepaßt ist, um Material aus dem Trichter auf die obere Platte der Korbanordnung zu entladen.

3. Ein Prozessor nach Anspruch 2, bei dem das Entladungstor (52) einstellbar ist, wodurch die Entladungsrate des Materials aus dem Trichter (44) einstellbar ist.

4. Ein Prozessor nach einem der vorhergehenden Ansprüche, bei dem die Zuführungsanordnung (16) einen zweiten Vibrator (50) einschließt, der auf dem Trichter befestigt ist.

5. Ein Prozessor nach einem der vorhergehenden Ansprüche, bei dem der erste Vibrator (20) eine rotierende, exzentrisch gewichtete, elektrische angetriebene Vibratoreinheit umfaßt.

6. Ein Prozessor nach Anspruch 5, bei dem die Vibratoreinheit eine Rotationsachse einschließt, die in eine flußaufwärtige Richtung vom Boden zur Spitze gegenüber der Vertikalen geneigt ist.

7. Ein Prozessor nach Anspruch 6, bei dem der Neigungswinkel der Vibrator-Rotationsachse etwa 18 Grad beträgt.

8. Ein Prozessor nach einem der vorhergehenden Ansprüche, bei dem die Korbanordnung (18) eine Vibrationskopplungsteilanordnung (92) einschließt, die den Vibrator (20) befestigt.

9. Ein Prozessor nach Anspruch 8, bei dem die Korbanordnung eine Bodenabdeckung (90) einschließt, die die Vibratorkopplungsteilanordnung befestigt, und bei dem die Vibrationskopplungsteilanordnung eine Abdeckung (106) am flußabwärtigen Ende einschließt, die den Vibrator befestigt.

10. Ein Prozessor gemäß einem der vorhergehenden Ansprüche, bei dem der Infrarotheizer (22) elektrisch angetrieben ist.

11. Ein Prozessor gemäß einem der Ansprüche 1 bis 9, bei dem der Infrarot-Heizer (22) gasgefeuert ist.

12. Ein Prozessor gemäß einem der vorhergehenden Ansprüche, bei dem der Vibrator (20) eine Mehrzahl von Vibratoranordnungen (91a-91c) umfaßt.

13. Ein Vibrator gemäß einem der vorhergehenden Ansprüche, bei dem die Vibrationsdämpfungseinrichtung (86) eine Mehrzahl von Stoß-Absorbierern umfaßt.

14. Ein Prozessor gemäß einem der vorhergehenden Ansprüche, der folgendes einschließt:
eine erste und eine zweite Korbanordnung (18a,18b), wobei die Befestigungseinrichtung (38,40) die erste und die zweite Korbanordnung mit dem flußabwärtigen Ende der ersten Korbanordnung oberhalb dem flußaufwärtigen Ende der zweiten Korbanordnung auf der Rahmentragewerkanordnung (14) befestigt;
einen Materialflußweg von dem flußaufwärtigen Ende der ersten Korbanordnung über die materialaufnehmende oberen Oberflächen der ersten Korbanordnungsplatte zu dem flußabwärtigen Ende der ersten Korbanordnung über das flußabwärtige Ende der ersten Korbanordnung zu dem flußaufwärtigen Ende der zweiten Korbanordnung über die materialaufnehmenden oberen Oberflächen der zweiten Korbanordnungsplatte zu dem flußabwärtigen Ende der zweiten Korbanordnung und über das flußabwärtige Ende der zweiten Korbanordnung; und
einen ersten und einen zweiten Vibrator (91a,91b), die wirksam mit der ersten bzw. der zweiten Korbanordnung verbunden sind.

15. Ein Prozessor gemäß Anspruch 14, bei dem der erste und der zweite Vibrator (91a,91b) auf der Kopplungsteilanordnung in einer quer nebeneinanderstehenden Beziehung befestigt sind.

16. Ein Prozessor gemäß Anspruch 14 oder 15, bei dem die erste und die zweite Vibratoreinheit (91a,91b) bezüglich der Vibrationsfrequenz und Amplitude unabhängig voneinander einstellbar sind.

## Revendications

1. Dispositif de traitement de matières en vrac par rayonnement (10), comprenant un ensemble châssis (14), des moyens définissant un chemin d'écoulement de matière, un vibreur (20) raccordé de façon active auxdits moyens définissant un chemin, des moyens amortisseurs de vibrations (86) raccordés audit ensemble châssis et auxdits moyens définissant un chemin, et un dispositif de chauffage infrarouge (22) monté sur ledit ensemble châssis au-dessus desdits moyens définissant un chemin, caractérisé en ce que lesdits moyens définissant un chemin sont constitués d'un ensemble à plateaux (18), qui comprend :
(1) une paire de parois latérales (72) espacées transversalement,
(2) une plaque supérieure (80a) s'étendant transversalement entre lesdites parois latérales et comprenant une surface supérieure (81) pour recevoir de la matière, et des extrémités amont et aval espacées longitudinalement,
(3) une plaque inférieure (80b) s'étendant transversalement entre lesdites parois latérales et comprenant une surface supérieure (81) pour recevoir de la matière, et des extrémités amont et aval espacées longitudinalement,
(4) des extrémités amont (68) et aval (70) d'ensemble à plateaux espacées longitudinalement, et
(5) des moyens de montage (38, 40, 42) pour monter ledit ensemble à plateaux sur ledit ensemble châssis,
ledit chemin d'écoulement de matière s'étend de ladite extrémité amont (68) de l'ensemble à plateaux, à ladite extrémité aval (70) de l'ensemble à plateaux, au-dessus desdites surfaces supérieures de plaques pour recevoir de la matière et entre lesdites parois latérales d'ensemble à plateaux,
et en ce que lesdits moyens amortisseurs de vibrations sont constitués d'un amortisseur pneumatique (86)

2. Dispositif de traitement selon la revendication 1, comprenant un ensemble alimentateur (16) monté au-dessus deladite plaque supérieure de l'ensemble à plateaux et comprenant une trémie (44) conçue pour recevoir de la matière, et une vanne de décharge (52) conçue pour décharger la matière de ladite trémie sur ladite plaque supérieure d'ensemble à plateaux.

3. Dispositif de traitement selon la revendication 2, dans lequel ladite vanne de décharge (52) est réglable, ce par quoi le débit de décharge de la matière depuis ladite trémie (44) est variable.

4. Dispositif de traitement selon l'une quelconque des revendications précédentes, dans lequel ledit ensemble alimentateur (16) comprend un second vibreur (50) monté sur ladite trémie.

5. Dispositif de traitement selon l'une quelconque des revendications précédentes, dans lequel ledit premier vibreur (20) est constitué d'une unité vibreur rotatif chargé de façon excentrique, alimentée électriquement.

6. Dispositif de traitement selon la revendication 5, dans lequel ladite unité vibreur comprend un axe de rotation incliné dans une direction amont de bas en haut par rapport à la verticale.

7. Dispositif de traitement selon la revendication 6, dans lequel l'angle d' inclinaison de l'axe de rotation du vibreur est approximativement de dix-huit degrés.

8. Dispositif de traitement selon l'une quelconque des revendications précédentes, dans lequel ledit ensemble à plateaux (18) comprend un sous-ensemble coupleur de vibrations (92) sur lequel vient se monter ledit vibreur (20).

9. Dispositif de traitement selon la revendication 8, dans lequel ledit ensemble à plateaux comprend un panneau de fond (90) sur lequel vient se monter ledit sous-ensemble coupleur de vibrations, et ledit sous-ensemble coupleur de vibrations comprend un panneau d'extrémité amont (106) sur lequel vient se monter ledit vibreur.

10. Dispositif de traitement selon l'une quelconque des revendications précédentes, dans lequel ledit dispositif de chauffage infrarouge (22) est alimenté électriquement.

11. Dispositif de traitement selon l'une quelconque des revendications 1 à 9, dans lequel ledit dispositif de chauffage infrarouge (22) est chauffé au gaz.

12. Dispositif de traitement selon l'une quelconque des revendications précédentes, dans lequel ledit vibreur (20) est constitué de plusieurs ensembles vibreurs (91a - 91c).

13. Dispositif de traitement selon l'une quelconque des revendications précédentes, dans lequel lesdits moyens amortisseurs (86) sont constitués de plusieurs amortisseurs.

14. Dispositif de traitement selon l'une quelconque des revendications précédentes, qui comprend un premier et un second ensembles à plateaux (18a - 18b), les moyens de montage (38, 40) montant en série lesdits premier et second ensembles à plateaux sur ledit ensemble châssis (14) avec ladite extrémité aval du premier ensemble à plateaux au-dessus deladite extrémité amont du second ensemble à plateaux, un chemin d'écoulement de matière depuis ladite extrémité amont du premier ensemble à plateaux, au-dessus desdites surfaces supérieures de plaques pour recevoir de la matière du premier ensemble à plateaux vers ladite extrémité aval du premier ensemble à plateaux, au-dessus de ladite extrémité aval du premier ensemble à plateaux vers ladite extrémité amont du second ensemble à plateaux, au-dessus desdites surfaces supérieures de plaques pour recevoir de la matière du second ensemble à plateaux vers ladite extrémité aval du second ensemble à plateaux et au-dessus deladite extrémité aval du second ensemble à plateaux, et des premier et second vibreurs (91a - 91b) raccordés, respectivement de façon active auxdits premier et second ensembles à plateaux.

15. Dispositif de traitement selon la revendication 14, dans lequel lesdits premier et second vibreurs (91a - 91b) sont montés sur un sous-ensemble d'accouplement en relation de juxtaposition transversale.

16. Dispositif de traitement selon la revendication 14 ou la revendication 15, dans lequel lesdites première et seconde unités vibreurs (91a - 91b) sont réglables de façon indépendante en ce qui concerne la fréquence et l'amplitude de vibration.
